# EUROPEAN PATENT APPLICATION

(11) **EP 2 037 644 A1**
(43) Date of publication of application: **18.03.2009**
(21) Application number: 07721070.6
(22) Date of filing: 08.05.2007
(51) Int. Cl.: H04L 12/66

(54) **A METHOD, DEVICE AND SYSTEM FOR CONNECTING TO A URL RESOURCE**

(30) Priority: 07.06.2006 CN 200610061022
(71) Applicant: Huawei Technologies Co., Ltd., Longgang District, Shenzhen Guangdong 518129 (CN)
(72) Inventor: LIN, Yongqi, Guangdong 518129 (CN); LI, Jun, Guangdong 518129 (CN); ZHOU, Yunhong, Guangdong 518129 (CN); LIAO, Yongxiong, Guangdong 518129 (CN); WANG, Sheng, Guangdong 518129 (CN)
(74) Representative: Karlsson, Leif Karl Gunnar
(86) International application number: PCT/CN2007/001497
(87) International publication number: WO 2007/140695

(57) **Abstract**

A method, device, and system for connecting to a URL resource, the said method comprises that: a connection request with a URL number from a terminal is received; the URL number is analyzed to obtain the corresponding URL, and the said URL is returned to the terminal; the terminal connects to the corresponding URL resource after it has received the said URL. The invention solves the problem that the URL resource can not be connected for lack of the input capacity of the terminal, and improves the efficiency that the terminal device accesses the URL resource.

## Description

This application claims priority to Chinese Patent Application No. 200610061022.4, entitled "A Method for Connecting to a URL Resource" and filed on June 7, 2006, which is hereby incorporated by reference in its entirety.

### Field of the Invention

The present invention relates to the field of communication technologies and in particular to a method, device and system for connecting to a URL resource.

### Background of the Invention

In the telecommunication industry, a call between User Equipments is typically made using a number for the purpose of communication or video in, for example, a traditional fixed network or wireless mobile communication network and a developing all IP communication network such as the NGN. As IP Internet resources are enriched and processing capabilities of a User Equipment are enhanced, more and more network applications, such as news information webpage browsing, video on demand, online TV live broadcast, network messaging and environment supervision, have been realized in the traditional communication network, and interaction technologies such as the Hypertext Transfer Protocol (HTTP), the Real Time Streaming Protocol (RTSP), and various wireless and fixed network protocols are involved. Locations of system information resources in the network, such as a web address and an FTP site address, are typically determined with Uniform Resource Locators (URLs).

Typically, to browse a URL resource over the network, an existing User Equipment employs such a technical scheme that a URL identifier is inputted in a character input mode and then the User Equipment connects to the corresponding resources through the URL identifier. However, in this scheme,
character data is difficult to be inputted to User Equipments with a poor input capability;
when a change is made to the network resource address or a hierarchical access is to be performed by users by groups, it is necessary to instruct the users to change the URL address or use a different URL address, thus causing the users numerous inconveniences; and
it is difficult for an IP resource provider to charge for or authenticate a User Equipment access through only the access by means of the URL.

As can be seen from the above, there is a need to effectively improve the efficiency of a User Equipment to access a URL resource, and implement effective

### Summary of the Invention

According to embodiments of the invention, a method, device and system for connecting to a URL resource are provided, so that efficiency of accessing a URL resource is improved for a User Equipment with a poor input capability.

According to an embodiment of the invention, a method for connecting to a URL resource is provided, including:
receiving a connection request carrying a URL number from a User Equipment;
resolving the URL number to obtain a corresponding URL and returning the corresponding URL to the User Equipment; and
connecting, by the User Equipment, to a corresponding URL resource upon receiving the URL.

According to an embodiment of the invention, a device for connecting to a URL resource is provided, including:
an extracting unit adapted to extract a URL number from a received connection request;
a storage unit adapted to store the URL number and a mapping rule between the URL number and a URL;
a resolving unit adapted to resolve the URL number to obtain a corresponding URL in accordance with the mapping rule between the URL number and the URL; and
a sending unit adapted to send the obtained corresponding URL to a User Equipment.

According to an embodiment of the invention, a User Equipment is provided, including:
a number inputting unit adapted to input a URL number;
a call unit adapted to send a call request carrying the inputted URL number to a registration device;
an identifying unit adapted to identify a corresponding URL returned by the registration device which obtains the corresponding URL through resolving the URL number; and
a processing unit adapted to connect to and access a corresponding URL resource in accordance with the URL.

According to an embodiment of the invention, a network system including a User Equipment and a device which are used for connecting to a URL resource is provided, where
the User Equipment sends a call request carrying an inputted URL number to the device;
the device extracts the URL number from the connection request received from the User Equipment;
the device resolves the URL number to obtain a corresponding URL in accordance with a mapping rule between the URL number and the URL;
the device sends the obtained corresponding URL to the User Equipment; and
the User Equipment identifies the corresponding URL returned by the device which obtains the corresponding URL through resolving the URL number, and connects to and accesses a corresponding URL resource in accordance with the URL.

In the solution according to the embodiments of the invention, a number call is used and a relationship between the URL number and the URL resource is resolved through the registration device and the resolving device, and the User Equipment connects directly to the URL resource after obtaining the URL of the resource device, so that the user may connect to the URL resource by means of a simple number keyboard without memorizing or inputting the lengthy URL, and those User Equipments with difficulty in inputting character data can also connect to the URL resource through number input, thereby alleviating the problem due to the poor input capability of the User Equipments.

In the embodiments of the invention, the number call is used in connecting to the URL resource, so that a resource publisher may publish the location of the resource by publishing a phone number; and when a change is made to the address of the network resource or users need to access network resources hierarchically by groups, the resource publisher may have different resources connected to as required differently without instructing the user to change the URL address, thereby facilitating dynamic management of the URL address by the resource publisher.

### Brief Description of the Drawings

Fig.1 is a schematic diagram of basic networking of a system in which a method for connecting to a URL resource is operated according to an embodiment of the invention;

Fig.2 is flow chart of a general implementation principle of the method for connecting to a URL resource according to the embodiment of the invention; and

Fig.3 is a flow chart showing that a User Equipment connects to a real time streaming media resource by calling a URL number according to an embodiment of the invention.

### Detailed Description of the Invention

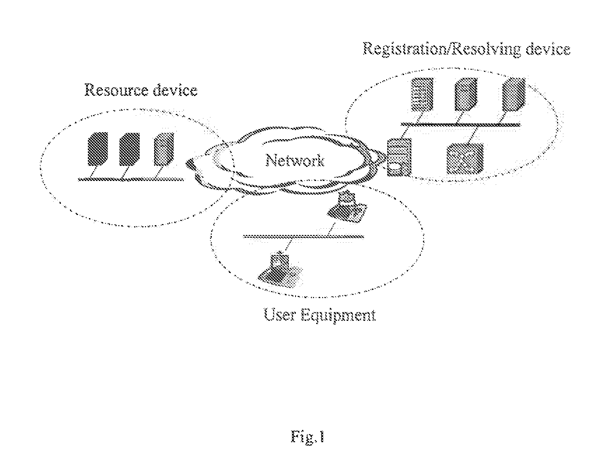

Prior to detailed descriptions of the method for connecting to a URL resource according to an embodiment of the invention, a system in which the method is operated will be described. With reference to Figure 1, the system in which the method according to the embodiment of the invention is operated includes a User Equipment, a registration device/resolving device (in this embodiment, the registration device and the resolving device may be arranged separately or in the same entity) and an IP resource device. The User Equipment is connected to the registration device and resolving device and the IP resource device via an IP network. In the system, the User Equipment, which may be a portable or home device used by an end user, is adapted to register with the registration device for registration of User Equipment information on one hand, and perform a number call registration, receive a URL that is obtained by the registration device through resolution and connect to a URL resource on the other hand; the registration device/resolving device, which is a device that may be called, is adapted to receive a number call from the User Equipment on one hand, and resolve the received number, obtain a URL of the resource device corresponding to the number and return the URL to the User Equipment via a call signaling protocol on the other hand; and the IP resource device may include URLs of a web page linkage, a file resource linkage, a real time streaming media linkage, etc.

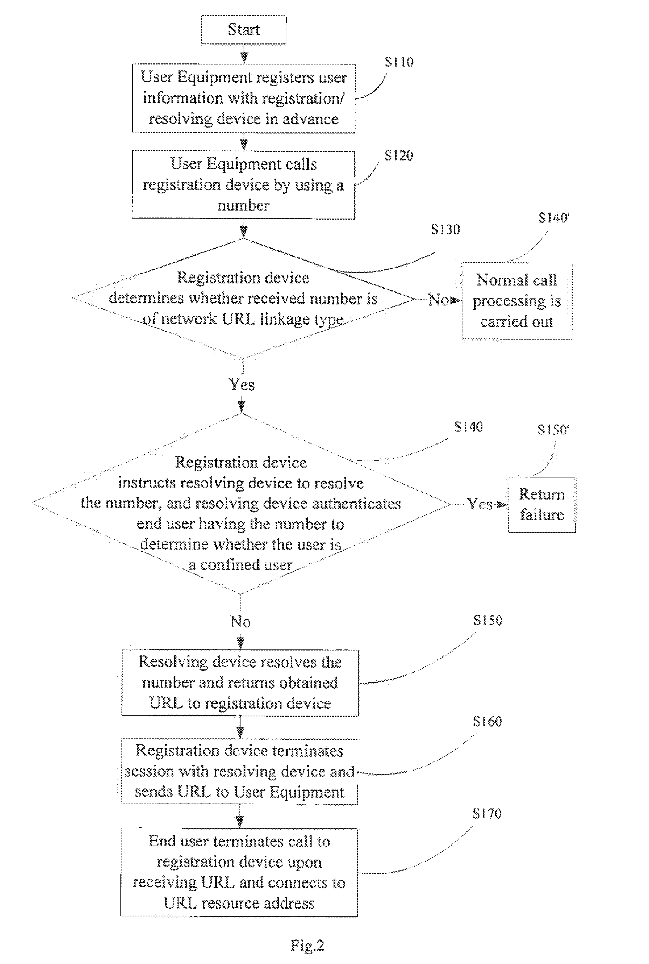

With reference to Figure 2, a flow chart of a general implementation principle of the method for connecting to a URL resource according to the embodiment of the invention is shown, including the following steps.

Step S110: Basic information on a user, including information on a URL number mapped to a URL, a password, a User Equipment type, and so on, is registered with a registration device/resolving device in advance, and a local number prefix rule and a mapping rule between the URL number and the URL are configured in the registration/resolving device.

Step S120: A call to the registration device is made through a User Equipment using the URL number.

Step S130: The registration device responds to the call, extracts the URL number from the call and determines from the local number prefix rule whether the number is of a network URL linkage type.

Step S140: If the URL number is of the network URL linkage type, the registration device instructs the resolving device to resolve the URL number, and the resolving device firstly authenticates the user of the URL number to determine whether the user is a confined user.

Step S140': If the URL number is not of the network URL linkage type, a normal call process is carried out.

Step S150: If the user is not a confined user, the resolving device resolves the URL number and returns to the registration device the URL corresponding to the URL number.

Step S150': If the user is a confined user, a failure is returned.

Step 160: The registration device terminates the session with the resolving device and returns the URL to the User Equipment.

Step 170: The User Equipment terminates the call to the registration device and connects to the URL resource address upon receiving the URL.

The invention will be further described in details below with reference to the drawings and embodiments, so that the objects, aspects and advantages of the invention will be made more apparent.

*Embodiments*

As shown in Figure 1, in this embodiment, the User Equipment is connected to the registration device with the H.323 protocol, the registration device is connected to the resolving device with the SIP protocol, and the terminal user may dial a phone number of 9990755001 to connect to a real time streaming media resource with a URL of rtsp://192.168.0.1:554/cat3gp.

Within the H.323 network, the registration device in this embodiment is the GateKeeper, and the registration protocol is H.225RAS.

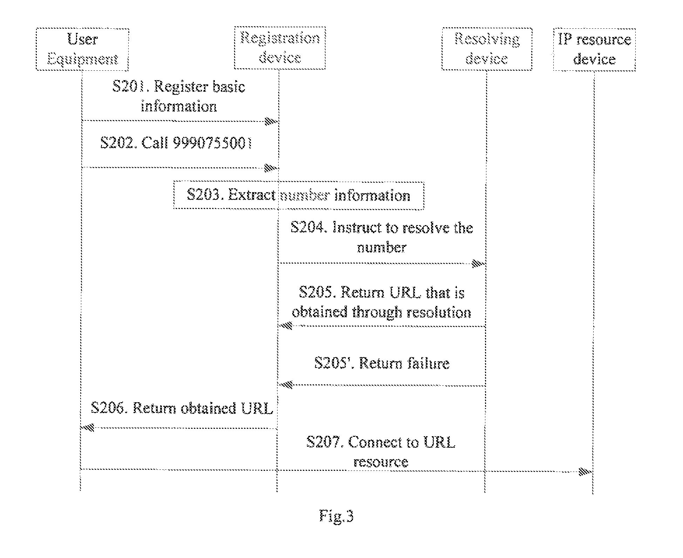

As shown in Figure 3, the User Equipment dials the phone number of 9990755001 to connect to the real time streaming media resource through the following steps.

Step S201: The User Equipment establishes a connection to the registration device GateKeeper, and registers basic information of a user, including a URL number, a RAS address, a password, a User Equipment type, etc., with the registration device GateKeeper through RRQ signaling. A local number prefix rule and a mapping rule between the URL number and a URL are also provided on the registration device GateKeeper.

Step S202: A call to the number of 9990755001 is made through the User Equipment using ARQ call signaling.

Step S203: The registration device responds to the call and extracts the number information of the call, and determines from the local number prefix rule. The prefix rule may use an algorithm of maximal matching of numbers. In this example, the registration device is provided with a service rule with a prefix number of 999, in this case, the registration device may perceive that the number is of a network URL linkage type, and thus resolve the number through an external resolving device. The resolution protocol between the registration device and the resolving device may be implemented with an IP phone call protocol which is herein a SIP based session.

Step S204: The registration device initiates a call to the resolving device through an INVITE message, and a calling number is arranged in a field FROM and a called number (i.e., the URL number of 9990755001 to be resolved) is arranged in a field TO.

Step S205: Upon receiving the call from the registration device, the resolving device extracts the information on the User Equipment and the number information of the call from the field FROM and field TO respectively, authenticates the information on the User Equipment as required by service management; and if the resolving device determines the number as belonging to a confined user, the step S205' is performed and a failure is returned immediately; or if a normal access is permitted, the resolving device analyzes the call number in the field TO and processes a service with the same algorithm of maximal matching of numbers as for the registration device, that is, the resolving device processes a service according to the service prefix of 999. At this time, the resolving device may convert 9990755001 to rtsp://192.168.0.1:554/cat.3gp by querying a local database and return the address of rtsp://192.168.0.1:554/cat.3gp in a text portion of the SIP message (200 OK), where the text portion is encoded with the SDP protocol, with an encoding format being u=rtsp://192.168.0.1:554/cat.3gp, so that a resolution result is returned to the registration device.

Step S206: After obtaining the URL connection corresponding to the number of 9990755001 in the step S105, the registration device terminates the session with the resolving device, and subsequently returns the URL address to the User Equipment through the ACF call response message. The URL address is stored in a nonstandard attribute nonStandardData.

Step S207: Upon obtaining the URL address information, the User Equipment terminates the call to the registration device, and resolves a protocol feature of the URL and connects an IP resource device with the URL address. In this embodiment, the User Equipment connects to the streaming media server with the rtsp://192.168.0.1:554/cat.3gp.

Thus, the procedure of resolving the number to obtain the URL is finished. In this procedure, the User Equipment is required to input only the ordinary number call and is required for no functional and structural modification, and the procedure is suitable to all of User Equipments based on the phone network. In resolving the called number to obtain the URL, a private resolving device may authenticate and control the call according to service requirements to ensure manageability of a call access. Upon receiving the number call, the resolving device authenticates and validates the User Equipment having the number call, and subsequently resolves the relationship between the number and the resource, thereby ensuring security of the User Equipment access to some extent.

The method according to the embodiment of the invention is typically applied to a resource access based on the IP network; however, the User Equipment of the access may not necessarily be an all IP device. In this case, a gateway may be used for the conversion between different protocols, such as protocol conversion between H.320 and H.323 networks.

In the embodiment of the invention, the User Equipment may be an IP visual phone, a set-top box conference User Equipment, a mobile phone, a PDA or computer with a function of phone call, etc.

A variation of the embodiment of the invention provides another related method for obtaining a URL in which the called User Equipment directly returns a URL address to the calling User Equipment through a point-to-point call, that is, the called User Equipment functions as a resolving server, and the calling User Equipment obtains the URL linkage address from the called User Equipment instead of a dedicated server, which shall also be within the scope of the invention.

A device for connecting to a URL resource according to an embodiment of the invention includes:
an extracting unit adapted to extract a URL number from a received connection request;
a storage unit adapted to store the URL number and a mapping rule between the URL number and a URL;
a resolving unit adapted to resolve the URL number to obtain a corresponding URL in accordance with the mapping rule between the URL number and the URL; and
a sending unit adapted to send the obtained corresponding URL to a User Equipment.

The device further includes:
an authentication unit adapted to authenticate the User Equipment.

The authentication unit authenticates the User Equipment in accordance with User Equipment information and number Information obtained from the connection request: if detecting that a normal access is allowed for the user, the resolving unit resolves the URL number to obtain the corresponding URL in accordance with the mapping rule between the URL number and the URL, and the sending unit returns the resolution result to the registration device.

An embodiment of the invention further provides a User Equipment including:
a number inputting unit adapted to input a URL number;
a call unit adapted to send a call request carrying the inputted URL number to a registration device;
an identifying unit adapted to identify a corresponding URL returned by the registration device which obtains the corresponding URL through resolving the URL number; and
a processing unit adapted to connect to and access a corresponding URL resource in accordance with the URL.

According to an embodiment of the invention, a network system including a User Equipment and a device for connecting to a URL resource is provided, where
the User Equipment sends a call request carrying an inputted URL number to the device;
the device extracts the URL number from the connection request received from the User Equipment;
the device resolves the URL number to obtain a corresponding URL in accordance with a mapping rule between the URL number and the URL;
the device sends the obtained corresponding URL to the User Equipment; and
the User Equipment identifies the corresponding URL returned by the device which obtains the corresponding URL through resolving the URL number, and connects to and accesses a corresponding URL resource in accordance with the URL.

As can be seen from the above embodiments, in the invention, a number call is used and a relationship between the URL number and the URL resource is resolved through the registration device and the resolving device, and the User Equipment connects directly to the URL resource after obtaining the URL of the resource device, so that the user may connect to the URL resource by means of a simple number keyboard without memorizing or inputting the lengthy URL, and those User Equipments with difficulty in inputting character data can also connect to the URL resource through number input, thereby alleviating the problem of the poor input capability of the User Equipments.

In the embodiments of the invention, the number call is used in connecting to the URL resource, so that a resource publisher may publish the location of the resource by publishing a phone number; and when a change is made to the address of the network resource or users need to access network resources hierarchically by groups, the resource publisher may have different resources connected to as required differently without instructing the user to change the URL address, thereby facilitating dynamic management of the URL address by the resource publisher.

The above embodiments are provided merely to illustrate the invention but not to limit the solution of the invention. Although the invention has been described in details with reference to the above embodiments, it shall be appreciated to those ordinarily skilled in the art that modifications or alternatives may be made to the invention without departing from the essential and scope of the invention, and all the modifications and alternatives are intended to be within the scope of the invention as defined in the appended claims.

## Claims

1. A method for connecting to a URL resource, comprising:
receiving a connection request carrying a URL number from a User Equipment;
resolving the URL number to obtain a corresponding URL, and returning the corresponding URL to the User Equipment; and
connecting, by the User Equipment, to a corresponding URL resource upon receiving the URL.

2. The method according to claim 1, further comprising:
registering and storing basic information of a user, wherein the basic information of the user comprises the URL number, a password, a User Equipment type, a mapping rule between the URL number and the URL ,and a local number prefix rule.

3. The method according to claim 2, wherein resolving the URL number to obtain the corresponding URL and returning the corresponding URL to the User Equipment comprises:
responding to the call request from the User Equipment, extracting the number information of the call request, determining whether the number is of the network URL link type in accordance with the local number prefix rule, and resolving the number if the number is of the network URL link type; otherwise, carrying out normal call processing.

4. The method according to claim 3, wherein the resolving the URL number to obtain the corresponding URL and returning the corresponding URL to the User Equipment further comprises:
extracting the User Equipment information and the number information from the received connection request, and authenticating the User Equipment: if detecting the user number as belonging to a confined user, returning failure information; and if detecting that a normal access is allowed for the user, converting the called number to a resource URL through querying a local database, and returning a resolution result.

5. The method according to claim 4, wherein the resolving the URL number to obtain the corresponding URL and returning the corresponding URL to the User Equipment further comprises:
returning the obtained resource device URL to the User Equipment through call response message upon obtaining the resource device URL.

6. The method according to claim 1, wherein the connecting, by the User Equipment, to the corresponding URL resource upon receiving the URL comprises:
resolving, by the User Equipment, the protocol feature of the URL upon obtaining information on the URL address, and connecting to a resource device corresponding to the URL address, and returning, by the resource device, a response result to the User Equipment in response to the request from the User Equipment.

7. The method according to any one of claims 1 to 6, wherein the User Equipment comprises an IP visual phone, a set-top box conference User Equipment, a mobile phone or a PDA or computer with a function of phone call.

8. The method according to any one of claims 1 to 6, wherein the URL resource comprises a webpage linkage resource, a file linkage resource and a real time streaming media linkage resource.

9. A device for connecting to a URL resource, comprising:
an extracting unit, adapted to extract a URL number from a received connection request;
a storage unit, adapted to store the URL number and a mapping rule between the URL number and a URL;
a resolving unit, adapted to resolve the URL number to obtain a corresponding URL in accordance with the mapping rule between the URL number and the URL; and
a sending unit, adapted to send the obtained corresponding URL to a User Equipment.

10. The device according to claim 9, further comprising:
an authentication unit adapted to authenticate the User Equipment; wherein,
the authentication unit authenticates the User Equipment in accordance with User Equipment information and the number information obtained from the connection request; if detecting that a normal access is allowed for the user, the resolving unit resolves the URL number to obtain the corresponding URL in accordance with the mapping rule between the URL number and the URL, and the sending unit returns the resolution result to the registration device.

11. A User Equipment, comprising:
a number inputting unit ,adapted to input a URL number;
a call unit, adapted to send a call request carrying the inputted URL number to a registration device;
an identifying unit, adapted to identify a corresponding URL returned by the registration device which obtains the corresponding URL through resolving the URL number; and
a processing unit, adapted to connect to and access a corresponding URL resource in accordance with the URL.

12. A network system, comprising a device for connecting to a URL resource and a User Equipment, wherein
the User Equipment is adapted to send a call request carrying an inputted URL number to the device;
the device is further adapted to extract the URL number from the connection request received from the User Equipment;
the device is further adapted to resolve the URL number to obtain a corresponding URL in accordance with a mapping rule between the URL number and the URL;
the device is further adapted to send the obtained corresponding URL to the User Equipment; and
the User Equipment is further adapted to identify the corresponding URL returned by the device which obtains the corresponding URL through resolving the URL number, and connects to and accesses a corresponding URL resource in accordance with the URL.
